# EUROPÄISCHE PATENTSCHRIFT

(11) **EP 3 502 362 B1**
(45) Veröffentlichungstag und Bekanntmachung des Hinweises auf die Patenterteilung: **10.05.2023**
(21) Anmeldenummer: 18214355.2
(22) Anmeldetag: 20.12.2018
(51) Int. Cl.: E03B 7/07, E03C 1/10, F16L 37/107, F16L 37/244

(54) **SICHERUNGSARMATUR**
SAFETY FITTING
ARMATURE DE SÉCURITÉ

(30) Priorität: 20.12.2017 DE 202017107759 U
(43) Veröffentlichungstag der Anmeldung: 26.06.2019
(73) Patentinhaber: Pittway Sàrl, 1180 Rolle (CH)
(72) Erfinder: Friedrich, Pierre, 74862 Binau (DE)
(74) Vertreter: Sturm, Christoph

(56) Entgegenhaltungen:
- WO-A1-00/70246
- WO-A2-2006/079002
- CN-U- 2 088 633
- DE-U1- 20 305 410
- US-A- 450 373
- US-A- 2 449 659

## Beschreibung

Die Erfindung betrifft eine Sicherungsarmatur nach dem Oberbegriff des Anspruchs 1.

Eine Sicherungsarmatur dient dem Schutz von Trinkwasser in Leitungen einer Trinkwasseranlage und Versorgungssystemen. So verhindern Sicherungsarmaturen eine Verunreinigung von Trinkwasser durch Nichttrinkwasser. Dabei sind aus der Praxis als Rückflussverhinderer und als Systemtrenner ausgebildete Sicherungsarmaturen bekannt. Bei einem Systemtrenner sind zwei Rückflussverhinderer hintereinander in Serie geschaltet, um einen gegenüber einem einfachen Rückflussverhinderer noch höheren Schutz des Trinkwassers vor Verunreinigungen zu gewährleisten.

Aus der EP 1 801 298 B1 ist eine als Systemtrenner ausgebildete Sicherungsarmatur bekannt. Dieser bekannte Systemtrenner verfügt über einen ersten, eingangsseitigen Rückflussverhinderer, einen zweiten, ausgangsseitigen Rückflussverhinderer sowie ein Ablassventil. Der eingangsseitige Rückflussverhinderer dient dem Unterbrechen einer Verbindung für eine Flüssigkeit zwischen einer ersten, sogenannten Vordruckzone und einer zweiten, sogenannten Mitteldruckzone. Der ausgangsseitige Rückflussverhinderer dient dem Unterbrechen einer Verbindung für die Flüssigkeit zwischen der zweiten, sogenannten Mitteldruckzone und einer dritten, sogenannten Hinterdruckzone. Das Ablassventil dient dem Entleeren der zweiten, sogenannten Mitteldruckzone von der Flüssigkeit.

Nach der EP 1 801 298 B1 sind ein Sperrelement des ersten, eingangsseitigen Rückflussverhinderers sowie ein Sperrelement des Ablassventils durch ein gemeinsames, topfartiges Element ausgebildet. Das topfartige Element verhindert, dass der erste, eingangsseitige Rückflussverhinderer und das Ablassventil gleichzeitig eine geöffnete Stellung einnehmen können. Ein Boden des topfartigen Elements ist dabei Teil des Sperrelements des ersten, eingangsseitigen Rückflussverhinderers und eine Wandung des topfartigen Elements ist Teil des Sperrelements des Ablassventils. In der Wandung des topfartigen Elements sind Ausnehmungen eingebracht, die bei geöffnetem, ersten, eingangsseitigem Rückflussverhinderer in Wirkverbindung mit einem Überströmkanal stehen, der als Nut in einer Wand eines den ersten, eingangsseitigen Rückflussverhinderer und das Ablassventil aufnehmenden Gehäuses der Sicherungsarmatur ausgebildet ist. Bei der Sicherungsarmatur der EP 1 801 298 B1 kann auf den zweiten, ausgangsseitigen Rückflussverhinderer verzichtet werden, wobei es sich dann nicht mehr um einen Systemtrenner handeln würde.

Der aus der EP 1 801 298 B1 bekannte Systemtrenner verfügt über ein Gehäuse, welches die beiden Rückflussverhinderer aufnimmt. An einem eingangsseitigen Abschnitt des Gehäuses ist ein Innengewinde und an einem ausgangsseitigen Abschnitt des Gehäuses ein Außengewinde ausgebildet, über welche der Systemtrenner an eine Trinkwasseranlage bzw. ein Versorgungssystem angeschlossen werden kann. Hierzu sind spezielle Werkzeuge erforderlich.

DE 203 05 410 U, WO 00/70246 A und WO 2006/079002 A offenbaren Sicherungsarmaturen, wobei WO 00/70246 A als nächstliegender Stand der Technik angesehen wird. Diese Dokument offenbart eine gattungsgemässe Sicherungsarmatur mit einem Gehäusedeckel und einem Ablassventil.

US 2 449 659 A, CN 2088633 U und US 450 373 A offenbaren weiteren Stand der Technik.

Es besteht Bedarf an einer Sicherungsarmatur, die einfach und ohne die Notwendigkeit spezieller Werkzeuge an eine Trinkwasseranlage bzw. ein Versorgungssystem angeschlossen werden kann. Dementsprechend liegt der hier vorliegenden Erfindung die Aufgabe zugrunde, eine Sicherungsarmatur bereitzustellen, deren Anschluss ohne spezielle Werkzeuge möglich ist.

Diese Aufgabe wird durch eine Sicherungsarmatur gemäß Anspruch 1 gelöst.

Die Sicherungsarmatur weist eine Eingangskupplung auf, die eine am Gehäuse fest montierte erste Kupplungshälfte und eine gegenüber der ersten Kupplungshälfte drehbare zweite Kupplungshälfte zur Anbindung der Sicherungsarmatur an eine eingangsseitige Zuführeinrichtung für Trinkwasser aufweist, wobei an der zweiten Kupplungshälfte Vorsprünge ausgebildet sind, die in entsprechende Ausnehmungen einer Gegenkupplung der eingangsseitigen Zuführeinrichtung einführbar sind, um durch anschließendes Verdrehen der zweiten Kupplungshälfte die Sicherungsarmatur über ihre Eingangskupplung bajonettartig an der Gegenkupplung der eingangsseitigen Zuführeinrichtung zu montieren.

Die Sicherungsarmatur weist ferner eine Ausgangskupplung zur Anbindung der Sicherungsarmatur an eine ausgangsseitige Entnahmeeinrichtung für Trinkwasser auf, die vorzugsweise am Gehäusedeckel fest montiert ist.

Die Sicherungsarmatur weist ferner einen an der drehbaren zweiten Kupplungshälfte der Eingangskupplung fest montierten ersten Betätigungshebel zum Verdrehen der zweiten Kupplungshälfte gegenüber der ersten Kupplungshälfte und damit gegenüber dem Gehäuse auf.

Über die beiden Kupplungen, nämlich die Eingangskupplung und die Ausgangskupplung, kann die Sicherungsarmatur einfach ohne spezielle Werkzeuge an eine Trinkwasseranlage bzw. ein Versorgungssystems angeschlossen werden.

Über den an der zweiten Kupplungshälfte der Eingangskupplung fest montierten ersten Betätigungshebel kann die zweite Kupplungshälfte der Eingangskupplung gegenüber der ersten Kupplungshälfte und damit gegenüber dem Gehäuse der Sicherungsarmatur verdreht werden, um insbesondere eine bajonettartige Verbindung zwischen der Eingangskupplung der Sicherungsarmatur und einer Gegenkupplung einer eingangsseitigen Zuführeinrichtung für Trinkwasser zu ermöglichen.

Zwischen der Ausgangskupplung und einer Gegenkupplung einer ausgangsseitigen Entnahmeeinrichtung kann ebenfalls eine bajonettartige Verbindung zwischen Sicherungsarmatur und ausgangsseitiger Entnahmeeinrichtung ausgebildet werden.

Nach einer vorteilhaften Weiterbildung der Erfindung weist der erste Betätigungshebel einen sich schräg von der drehbaren zweiten Kupplungshälfte der Eingangskupplung weg erstreckenden, mit der zweiten Kupplungshälfte fest verbundenen ersten Abschnitt, einen sich parallel zu einer Längsmittelachse des Gehäuses erstreckenden, mit dem ersten Abschnitt fest verbundenen zweiten Abschnitt und einen sich schräg zum Gehäuse hin erstreckenden, mit dem zweiten Abschnitt fest verbundenen dritten Abschnitt auf. Ein solcher erster Betätigungshebel erlaubt ein einfaches Ankoppeln der Sicherungsarmatur an die eingangsseitige Zuführeinrichtung für Trinkwasser. Insbesondere kann die Sicherungsarmatur einfach und ohne spezielle Werkzeuge an einen Hydranten angebunden werden.

Nach einer vorteilhaften Weiterbildung der Erfindung weist die Sicherungsarmatur einen an der drehbaren zweiten Kupplungshälfte der Eingangskupplung fest montierten zweiten Betätigungshebel zum Verdrehen der zweite Kupplungshälfte gegenüber der ersten Kupplungshälfte auf. Durch die Kombination von erstem Betätigungshebel und zweitem Betätigungshebel kann die Ankopplung der Sicherungsarmatur an die eingangsseitige Zuführeinrichtung weiter erleichtert werden.

Vorzugsweise sind der erste Betätigungshebel und der zweite Betätigungshebel um 180° versetzt an der drehbaren zweiten Kupplungshälfte der Eingangskupplung montiert. Dies ist besonders bevorzugt, um die Sicherungsarmatur einfach ohne zusätzliche Werkzeuge an die eingangsseitige Zuführeinrichtung für Trinkwasser, wie zum Beispiel einen Hydranten oder eine Eingangsleitung, anzubinden.

Nach einer vorteilhaften Weiterbildung der Erfindung weist das Gehäuse einen Anschlag auf, welcher die Drehbarkeit der zweiten Kupplungshälfte gegenüber der ersten Kupplungshälfte und damit gegenüber dem Gehäuse beschränkt. Vorzugsweise wirkt der Anschlag mit dem dritten Abschnitt des ersten Betätigungshebels zusammen.

Dann, wenn die Sicherungsarmatur an die eingangsseitige Zuführeinrichtung, wie einen Hydranten, angebunden ist, ist das Gehäuse der Sicherungsarmatur drehbar. Der Anschlag begrenzt die Drehbarkeit des Gehäuses und erlaubt es, die an die eingangsseitige Zuführeinrichtung montierte Sicherungsarmatur auch einfach und zuverlässig mit der ausgangsseitigen Entnahmeeinrichtung, zum Beispiel einer Leitung oder einem Schlauch, zu verbinden.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: eine Seitenansicht einer ersten erfindungsgemäßen Sicherungsarmatur;
- Fig. 2: eine Seitenansicht einer zweiten erfindungsgemäßen Sicherungsarmatur;
- Fig. 3: eine Seitenansicht einer dritten erfindungsgemäßen Sicherungsarmatur;
- Fig. 4: einen Querschnitt durch die Sicherungsarmatur der Fig. 3;
- Fig. 5: eine perspektivische Ansicht der Sicherungsarmatur der Fig. 3.

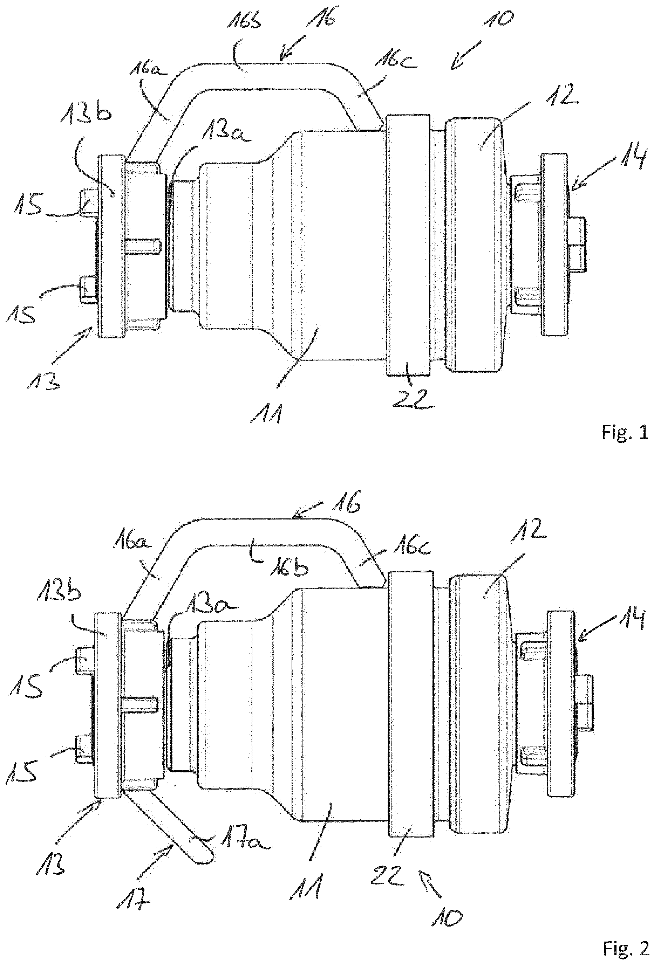

Fig. 1 zeigt eine Seitenansicht einer ersten erfindungsgemäßen Sicherungsarmatur 10. Die Sicherungsarmatur 10 verfügt über ein Gehäuse 11 sowie einen Gehäusedeckel 12. Gehäuse 11 und Gehäusedeckel 12 definieren zusammen einen Hohlraum bzw. Innenraum, in welchem ein in Fig. 1 nicht sichtbarer Rückflussverhinderer sowie ein nicht gezeigtes Ablassventil angeordnet sind. Der Rückflussverhinderer dient dem Unterbrechen einer Verbindung für eine die Sicherungsarmatur 10 durchströmende Flüssigkeit zwischen einer ersten Zone, insbesondere einer eingangsseitigen Vordruckzone, und einer zweiten Zone, insbesondere einer ausgangsseitigen Hinterdruckzone. Das Ablassventil dient dem Entleeren der zweiten Zone von der Flüssigkeit.

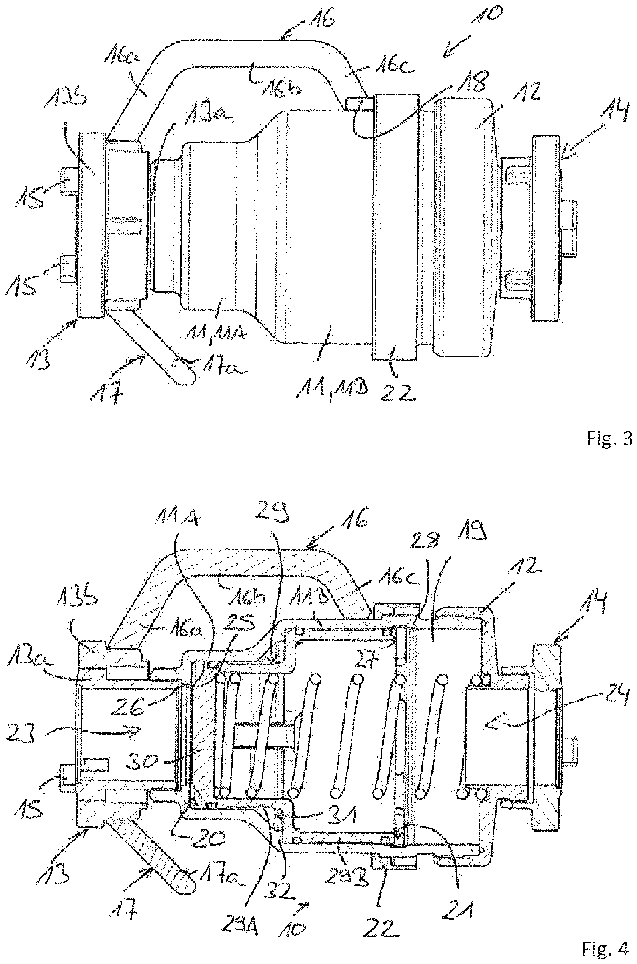

Es sei an dieser Stelle darauf hingewiesen, dass der grundsätzliche Aufbau von Rückflussverhinderern sowie Ablassventilen von Sicherungsarmaturen dem hier angesprochenen Fachmann geläufig sind. Diesbezüglich sei zum Beispiel auf die EP 1 801 298 B1 verwiesen. Sind zwei Rückflussverhinderer im Innenraum der Sicherungsarmatur hintereinander geschaltet, so bildet die Sicherungsarmatur einen Systemtrenner aus. Auf Besonderheiten von in der Sicherungsarmatur 10 zum Einsatz kommenden Rückflussverhinderer und Ablassventil wird weiter unten unter Bezugnahme auf Fig. 4 eingegangen.

Die Sicherungsarmatur 10 der Fig. 1 verfügt über eine Eingangskupplung 13 und eine Ausgangskupplung 14. Über die Eingangskupplung 13 ist die Sicherungsarmatur 10 an einer eingangsseitigen Zuführeinrichtung für Trinkwasser montierbar, so zum Beispiel an einen Hydranten. Über die Ausgangskupplung 14 ist an der Sicherungsarmatur 11 eine ausgangsseitige Entnahmeeinrichtung für Trinkwasser, insbesondere ein Schlauch oder eine Leitung, montierbar.

Die Eingangskupplung 13 verfügt über eine am Gehäuse 11 fest montierte erste Kupplungshälfte 13a und eine gegenüber der ersten Kupplungshälfte 13a sowie gegenüber dem Gehäuse 11 drehbare, zweite Kupplungshälfte 13b.

An der zweiten Kupplungshälfte 13b sind Vorsprünge 15 ausgebildet, die in entsprechende Ausnehmungen einer Gegenkupplung der eingangsseitigen Versorgungseinrichtung einführbar sind, um durch anschließendes Verdrehen der zweiten Kupplungshälfte 13b die Sicherungsarmatur 11 über ihre Eingangskupplung 13 bajonettartig an der Gegenkupplung der eingangsseitigen Zuführeinrichtung zu montieren.

Um diese Montage einfach zu gestalten, verfügt die Sicherungsarmatur 10 der Fig. 1 über einen Betätigungshebel 16, der an der drehbaren zweiten Kupplungshälfte 13b der Eingangskupplung 13 fest montiert ist.

Über den Betätigungshebel 16 kann die Sicherungsarmatur 10 zur Montage derselben an einer eingangsseitigen Zuführeinrichtung für Trinkwasser, wie zum Beispiel zur Montage an einem Hydranten, ergriffen werden, wobei über den Betätigungshebel 16 die drehbare zweite Kupplungshälfte 13 leicht gegenüber der ersten Kupplungshälfte 13a und dem Gehäuse 11 verdreht werden kann, um die Bajonettverbindung zwischen der Eingangskupplung 13 der Sicherungsarmatur 10 und der Gegenkupplung der eingangsseitigen Zuführeinrichtung auszubilden.

Der Betätigungshebel 16 der Fig. 1 verfügt über einen sich schräg von der drehbaren zweiten Kupplungshälfte 13b weg erstreckenden, mit der zweiten Kupplungshälfte 13b fest verbundenen ersten Abschnitt 16a, der mit einer Längsmittelachse der Sicherungsarmatur 10 bzw. des Gehäuses 11 der Sicherungsarmatur 10 einen Winkel, vorzugsweise zwischen 30° und 60°, einschließt. An diesen ersten Abschnitt 16a schließt sich ein zweiter Abschnitt 16b des Betätigungshebels 16 an, der mit dem ersten Abschnitt 16a fest verbunden ist und sich parallel zur Längsmittelachse des Gehäuses 11 der Sicherungsarmatur 10 erstreckt. An diesen zweiten Abschnitt 16b schließt sich ein dritter Abschnitt 16c an, der sich ausgehend vom zweiten Abschnitt 16b schräg zum Gehäuse 11 hin erstreckt, mit dem zweiten Abschnitt 16b des Betätigungshebels 16 fest verbunden ist, jedoch nicht mit dem Gehäuse 11, sodass der Betätigungshebel 16 zusammen mit der zweiten Kupplungshälfte 13b der Eingangskupplung 13 relativ zum Gehäuse 11 verdreht werden kann. Der dritte Abschnitt 16c schließt mit der Längsmittelachse der Sicherungsarmatur 10 vorzugsweise einen Winkel zwischen 30° und 60° ein.

Fig. 2 zeigt eine zweite erfindungsgemäße Sicherungsarmatur 10, die sich von der Sicherungsarmatur 10 der Fig. 1 dadurch unterscheidet, dass die Sicherungsarmatur 10 der Fig. 2 zusätzlich zum ersten Betätigungshebel 16 einen zweiten Betätigungshebel 17 aufweist, der ebenso wie der erste Betätigungshebel 16 fest mit der drehbaren zweiten Kupplungshälfte 13b der Eingangskupplung 13 der Sicherungsarmatur 10 verbunden ist.

Dabei sind die beiden Betätigungshebel 16, 17 um 180° versetzt an der zweiten Kupplungshälfte 13b der Eingangskupplung 13 befestigt. Hierdurch kann die Sicherungsarmatur 10 noch vorteilhafter ergriffen werden, um die Sicherungsarmatur 10 über ihre Eingangskupplung 13 an eine Gegenkupplung einer eingangsseitigen Versorgungseinrichtung anzubinden.

Gemäß Fig. 2 weisen die beiden Betätigungshebel 16, 17 unterschiedliche geometrische Konturen auf. So verfügt der zweite Betätigungshebel 17 lediglich über einen sich schräg von der drehbaren zweiten Kupplungshälfte 13b der Eingangskupplung 13 weg erstreckenden Abschnitt 17a. Dies ist zum Aufbringen eines Anzugsmoments für die Eingangskupplung 13 besonders bevorzugt. Der Abschnitt 17a schließt mit der Längsmittelachse der Sicherungsarmatur 10 vorzugsweise einen Winkel zwischen 30° und 60° ein.

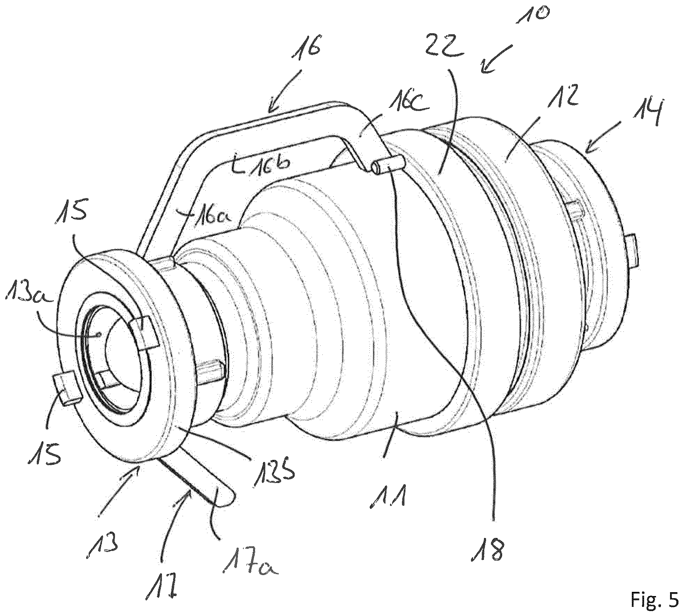

Eine weitere Ausführungsform einer erfindungsgemäßen Sicherungsarmatur zeigt Fig. 3, wobei Fig. 4 einen Querschnitt durch die Sicherungsarmatur 10 der Fig. 3 und Fig. 5 eine perspektivische Ansicht derselben zeigt.

Die Sicherungsarmatur der Fig. 3 bis 5 unterscheidet sich von der Sicherungsarmatur der Fig. 2 dadurch, dass das Gehäuse 11 einen Anschlag 18 aufweist, welcher die Drehbarkeit der zweiten Kupplungshälfte 13b gegenüber der ersten Kupplungshälfte 13a und gegenüber dem Gehäuse 11 beschränkt. Dieser Anschlag 18 wirkt mit dem ersten Betätigungshebel 16 zusammen, nämlich mit dem dritten Abschnitt 16c desselben.

Dann, wenn die Sicherungsarmatur 10 über ihre Eingangskupplung 13 an der Gegenkupplung einer nicht gezeigten, eingangsseitigen Zuführeinrichtung für Trinkwasser montiert ist, ist das Gehäuse 11 grundsätzlich um seine Längsmittelachse drehbar. Dies ist von Nachteil, um nachfolgend an der Ausgangskupplung 14 der Sicherungsarmatur 10 eine ausgangsseitige Entnahmeeinrichtung für Trinkwasser anzubinden.

Liegt jedoch der erste Betätigungshebel 16 mit seinem Abschnitt 16c am Anschlag 18 an, so wird hierdurch die Drehbarkeit des Gehäuses 11 beschränkt, wodurch dann an der Ausgangskupplung 14 eine ausgangsseitige Entnahmeeinrichtung für Trinkwasser einfach befestigt werden kann.

Sowohl im Bereich der Ausgangskupplung 14 als auch im Bereich der Eingangskupplung 13 erfolgt vorzugsweise eine bajonettartige Verbindung der Sicherungsarmatur 10 entweder mit der Entnahmeeinrichtung oder der Zuführeinrichtung. Die Sicherungsarmatur 10 kommt insbesondere in Feuerwehranwendungen zum Einsatz, wobei dann die Sicherungsarmatur 10 mit der Eingangskupplung 13 an einen Hydranten und mit der Ausgangskupplung 14 an einen Schlauch angebunden wird. Bei einer Feuerwehranwendung dient das Trinkwasser als Löschwasser.

Fig. 4 zeigt einen Querschnitt durch die Sicherungsarmatur 10 der Fig. 3, 5 und gibt so einen Blick auf den in dem Innenraum 19 des Gehäuses 11 positionierten Rückflussverhinderer 20 sowie auf das Ablassventil 21 frei. Dort, wo über das Ablassventil 21 Flüssigkeit auf der Sicherungsarmatur 10 in die Umgebung abgeleitet bzw. abgeführt werden kann, greift am Gehäuse 11 drehfest ein Spritzschutzring 22, der Bestandteil des Gehäuses 10 ist, an. Gemäß Fig. 5 greift der Anschlag 18 am Spritzschutzring 22 an. Über den Spritzschutzring 22 wird ein unkontrolliertes Entweichen von über das Ablassventil 21 strömende Flüssigkeit in die Umgebung verhindert. Vielmehr definiert der Spritzschutzring 22 eine definierte Richtung für Flüssigkeit, die über das Ablassventil 21 aus der Sicherungsarmatur 10 entweicht.

Der Rückflussverhinderer 20 dient dem Unterbrechen einer Verbindung für die Flüssigkeit zwischen einer ersten Zone 23 und einer zweiten Zone 24. Das Ablassventil 13 dient dem Entleeren der zweiten Zone 24 von der Flüssigkeit.

Der Rückflussverhinderer 20 verfügt über ein Sperrelement 25 und einen Ventilsitz 26. Dann, wenn das Sperrelement 25 des Rückflussverhinderers 20 am Ventilsitz 26 des Rückflussverhinderers 20 anliegt, ist die Strömung der Flüssigkeit zwischen der ersten Zone 23 und der zweiten Zone 24 unterbrochen.

Das Absperrventil 21 verfügt ebenfalls über ein Sperrelement 27 und einen Ventilsitz 28. Dann, wenn das Sperrelement 27 des Ablassventils 21 am Ventilsitz 28 des Sperrelements 27 anliegt, kann die zweite Zone 24 nicht von der Flüssigkeit entleert werden.

Das Sperrelement 25 des Rückflussverhinderers 20 und das Sperrelement 27 des Ablassventils 21 sind von einem gemeinsamen, topfartigen Element 29 bereitgestellt. Das topfartige Element 29 ist dabei derart ausgeführt, dass der Rückflussverhinderer 20 und das Ablassventil 21 nicht gleichzeitig in einer geöffneten Stellung sein können. Fig. 4 zeigt, dass dann, wenn der Rückflussverhinderer 20 die geschlossene Stellung einnimmt, das Ablassventil 21 geöffnet ist.

Das topfartige Element 29, welches einerseits das Sperrelement 25 des Rückflussverhinderers 20 und andererseits das Sperrelement 27 des Ablassventils 21 bereitstellt, weist Abschnitte 29A und 29B mit unterschiedlichen Durchmessern auf. Ein erster Abschnitt 29A des topfartigen Elements 29 verfügt über einen Boden 30 und einen ersten Wandungsabschnitt, der rohrartig bzw. zylinderartig konturiert ist und einen ersten Außendurchmesser und einen ersten Innendurchmesser aufweist. Der Boden 30 des ersten Abschnitts 29A des topfartigen Elements 29 ist Bestandteil des Sperrelements 25 des Rückflussverhinderers 20. Ein sich an den ersten Abschnitt 29A anschließender zweiter Abschnitt 29B des topfartigen Elements 29 verfügt über einen zweiten Wandungsabschnitt, der rohrartig bzw. zylinderartig konturiert ist und einen zweiten Außendurchmesser und einen zweiten Innendurchmesser umfasst. Der zweite Wandungsabschnitt des zweiten Abschnitts 29B des topfartigen Elements 29 ist Bestandteil des Sperrelements 29 des Ablassventils 21.

Der zweite Außendurchmesser des zweiten Abschnitts 29B ist größer als der erste Außendurchmesser des ersten Abschnitts 29A.

Das Gehäuse 11 verfügt über Gehäuseabschnitte 11A, 11B die an die beiden Abschnitte 29A, 29B des topfartigen Elements 20 angepasst sind. So dient ein erster Gehäuseabschnitt 11A der Führung des ersten Abschnitts 29A des topfartigen Elements 29, wobei der Innendurchmesser des ersten Gehäuseabschnitts 11A an einen ersten Außendurchmesser des ersten Abschnitts 29A des topfartigen Elements 29 angepasst ist. Der zweite Abschnitt 29B des topfartigen Elements 29 ist im zweiten Gehäuseabschnitt 11B geführt, wobei der Innendurchmesser des zweiten Gehäuseabschnitts 11B an den Außendurchmesser des zweiten Abschnitts 29B des topfartigen Elements 29 angepasst ist.

Das Gehäuse 11 bildet zwischen dem ersten Gehäuseabschnitt 11A und dem zweiten Gehäuseabschnitt 11B einen Überströmkanal 31 aus. Der Überströmkanal 31 geht vorzugsweise angrenzend an den zweiten Gehäuseabschnitt 11B, in welchem der Abschnitt 29B des topfartigen Elements 29 geführt ist, in einen Anschlag 32 für den zweiten Abschnitt 20B des topfartigen Elements 20 über. Fig. 4 kann entnommen werden, dass der erste Abschnitt 29A des topfartigen Elements 29 stufenartig in den zweiten Abschnitt 29B des topfartigen Elements 29 übergeht. Demnach geht auch der erste Außendurchmesser stufenartig in den zweiten Außendurchmesser über, ebenso geht der erste Innendurchmesser stufenartig in den zweiten Innendurchmesser über. Der Übergang vom ersten Gehäuseabschnitt 11A in den zweiten Gehäuseabschnitt 11B erfolgt nicht stufenartig, sondern vielmehr kontinuierlich unter Ausbildung des Überströmkanals 31. Der Innendurchmesser des Überströmkanals 31 angrenzend an den Anschlag 32 ist maximal so groß wie der zweite Innendurchmesser des zweiten Abschnitts 29B des topfartigen Elements 29. Vorzugsweise ist der Innendurchmesser des Überströmkanals 31 unmittelbar angrenzend an den Anschlag 32 kleiner als der zweite Innendurchmesser des zweiten Abschnitts 29B des topfartigen Elements 29.

Die obige Konturierung des topfartigen Elements 29 mit den beiden Abschnitten 29A, 29B sowie die obige Dimensionierung der Außendurchmesser der beiden Abschnitte 29A, 29B des topfartigen Elements 29 sowie die Dimensionierung der Innendurchmesser von zweitem Abschnitt 29B des topfartigen Elements 29 und Überströmkanal 31 unmittelbar angrenzend an den Anschlag 32 ermöglicht, dass die Sicherungsarmatur 10 bei sich schließendem Rückflussverhinderer 20 vollständig über das Ablassventil 21 entleert werden kann. Es besteht keine Gefahr, dass sich bei schließendem Rückflussverhinderer 20 in der Sicherungsarmatur 10 Wasser sammelt.

Es sei nochmals darauf hingewiesen, dass die erste Kupplungshälfte 13a der Eingangskupplung 13 fest am Gehäuse 11 montiert ist. Die zweite Kupplungshälfte 13b ist gegenüber der ersten Kupplungshälfte 13a und dem Gehäuse 11 drehbar. Der oder jede Betätigungshebel 16, 17 greift fest an der zweiten Kupplungshälfte 13b an. Der Gehäusedeckel 12 und der Spritzschutzring 22 greifen fest am Gehäuse 11 an. Die Ausgangskupplung 14 ist fest am Gehäusedeckel 12 und damit auch fest am Gehäuse 11 montiert.

### Bezugszeichenliste

- 10: Sicherungsarmatur
- 11: Gehäuse
- 11A: Gehäuseabschnitt
- 11B: Gehäuseabschnitt
- 12: Gehäuse
- 13: Eingangskupplung
- 13a: Kupplungshälfte
- 13b: Kupplungshälfte
- 14: Ausgangskupplung
- 15: Vorsprung
- 16: Betätigungshebel
- 16a: Abschnitt
- 16b: Abschnitt
- 16c: Abschnitt
- 17: Betätigungshebel
- 17a: Abschnitt
- 18: Anschlag
- 19: Innenraum
- 20: Rückflussverhinderer
- 21: Ablassventil
- 22: Spritzschutzring
- 23: erste Zone
- 24: zweite Zone
- 25: Sperrelement
- 26: Ventilsitz
- 27: Sperrelement
- 28: Ventilsitz
- 29: topfartiges Element
- 29A: Abschnitt
- 29B: Abschnitt
- 30: Boden
- 31: Überströmkanal
- 32: Anschlag

## Patentansprüche

1. Sicherungsarmatur (10),
mit einem Gehäuse (11) und einem Gehäusedeckel (12), die zusammen einen Hohlraum oder Innenraum definieren,
mit einem in dem Hohlraum oder Innenraum angeordneten Rückflussverhinderer (20) zum Unterbrechen einer Verbindung für eine Flüssigkeit zwischen einer ersten Zone (23) der Sicherungsarmatur (10) und einer zweiten Zone (24) der Sicherungsarmatur (10),
mit einem in dem Hohlraum oder Innenraum angeordneten Ablassventil (21) zum Entleeren der zweiten Zone (24) der Sicherungsarmatur (10) von der Flüssigkeit,
mit einer Ausgangskupplung (14) zur Anbindung der Sicherungsarmatur (10) an eine ausgangsseitige Entnahmeeinrichtung für Trinkwasser,
**gekennzeichnet durch**
eine Eingangskupplung (13), die eine am Gehäuse (11) fest montierte erste Kupplungshälfte (13a) und eine gegenüber der ersten Kupplungshälfte (13a) drehbare zweite Kupplungshälfte (13b) zur Anbindung der Sicherungsarmatur an eine eingangsseitige Zuführeinrichtung für Trinkwasser aufweist, wobei an der zweiten Kupplungshälfte (13b) Vorsprünge (15) ausgebildet sind, die in entsprechende Ausnehmungen einer Gegenkupplung der eingangsseitigen Zuführeinrichtung einführbar sind, um durch anschließendes Verdrehen der zweiten Kupplungshälfte (13b) die Sicherungsarmatur (11) über ihre Eingangskupplung (13) bajonettartig an der Gegenkupplung der eingangsseitigen Zuführeinrichtung zu montieren,
einen an der drehbaren zweiten Kupplungshälfte (13b) der Eingangskupplung (13) fest montierten ersten Betätigungshebel (16) zum Verdrehen der zweiten Kupplungshälfte (13b) der Eingangskupplung (13) gegenüber der ersten Kupplungshälfte (13a) der Eingangskupplung (13) und gegenüber dem Gehäuse (11).

2. Sicherungsarmatur nach Anspruch 1, **dadurch gekennzeichnet, dass** der erste Betätigungshebel (16) einen sich schräg von der drehbaren zweiten Kupplungshälfte (13b) der Eingangskupplung (13) weg erstreckenden, mit der zweiten Kupplungshälfte (13b) fest verbundenen ersten Abschnitt (16a), einen sich parallel zu einer Längsmittelachse des Gehäuses (11) erstreckenden, mit dem ersten Abschnitt (16a) fest verbundenen zweiten Abschnitt (16b) und einen sich schräg zum Gehäuse (11) hin erstreckenden, mit dem zweiten Abschnitt (16b) fest verbundenen dritten Abschnitt (16c) aufweist.

3. Sicherungsarmatur nach Anspruch 1 oder 2, **gekennzeichnet durch** einen an der drehbaren zweiten Kupplungshälfte (13b) der Eingangskupplung (13) fest montierten zweiten Betätigungshebel (17) zum Verdrehen der zweite Kupplungshälfte (13b) gegenüber der ersten Kupplungshälfte (13a).

4. Sicherungsarmatur nach Anspruch 3, **dadurch gekennzeichnet, dass** der erste Betätigungshebel (16) und der zweite Betätigungshebel (17) um 180° versetzt an der drehbaren zweiten Kupplungshälfte (13b) der Eingangskupplung (13) montiert sind.

5. Sicherungsarmatur nach Anspruch 3 oder 4, **dadurch gekennzeichnet, dass** der erste Betätigungshebel (16) und der zweite Betätigungshebel (17) unterschiedliche geometrische Konturen aufweisen.

6. Sicherungsarmatur nach einem der Ansprüche 3 bis 5, **dadurch gekennzeichnet, dass** der zweite Betätigungshebel (17) sich schräg von der drehbaren zweiten Kupplungshälfte (13b) der Eingangskupplung (13) weg erstreckt.

7. Sicherungsarmatur nach einem der Ansprüche 1 bis 6, **dadurch gekennzeichnet, dass** das Gehäuse (11) einen Anschlag (18) aufweist, welcher die Drehbarkeit der zweiten Kupplungshälfte (13b) gegenüber der ersten Kupplungshälfte (13a) und gegenüber dem Gehäuse (11) beschränkt.

8. Sicherungsarmatur nach Anspruch 7, **dadurch gekennzeichnet, dass** der Anschlag (18) mit dem dritten Abschnitt (16c) des ersten Betätigungshebels (16) zusammenwirkt.

9. Sicherungsarmatur nach einem der Ansprüche 1 bis 8, **dadurch gekennzeichnet, dass**
sowohl der Rückflussverhinderer (20) als auch das Ablassventil (21) ein Sperrelement (25, 27) und einen Ventilsitz (26, 28) umfassen, die gegeneinander beweglich sind,
das Sperrelement (25) des Rückflussverhinderers (20) und das Sperrelement (27) des Ablassventils (21) durch ein gemeinsames, topfartiges Element (29) gebildet sind, welches verhindert, dass der Rückflussverhinderer (20) und das Ablassventil (21) gleichzeitig in einer geöffneten Stellung sein können.

## Claims

1. Safety fitting (10),
comprising a housing (11) and a housing cover (12), which together define a cavity or interior space,
comprising a backflow preventer (20) which is arranged in the cavity or interior space and which is intended to interrupt a connection for a liquid between a first zone (23) of the safety fitting (10) and a second zone (24) of the safety fitting (10),
comprising a discharge valve (21) which is arranged in the cavity or interior space and which is intended to empty the second zone (24) of the safety fitting (10) of the liquid,
comprising an output coupling (14) for connecting the safety fitting (10) to an output-side removal device for drinking water,
**characterized by**
an input coupling (13) which has a first coupling half (13a) that is fixedly mounted on the housing (11) and a second coupling half (13b) that is rotatable in relation to the first coupling half (13a) and that is intended to connect the safety fitting to an input-side supply device for drinking water, wherein projections (15) are formed on the second coupling half (13b), said projections being able to be introduced into corresponding recesses of a counterpart coupling of the input-side supply device in order to mount, by subsequent rotation of the second coupling half (13b), the safety fitting (11) on the counterpart coupling of the input-side supply device in a bayonet-like manner by way of the input coupling (13) thereof,
a first actuating lever (16) which is fixedly mounted on the rotatable second coupling half (13b) of the input coupling (13) and which is intended to rotate the second coupling half (13b) of the input coupling (13) in relation to the first coupling half (13a) of the input coupling (13) and in relation to the housing (11).

2. Safety fitting according to Claim 1, **characterized in that** the first actuating lever (16) has a first portion (16a) which extends obliquely away from the rotatable second coupling half (13b) of the input coupling (13) and which is fixedly connected to the second coupling half (13b), a second portion (16b) which extends parallel to a longitudinal centre axis of the housing (11) and which is fixedly connected to the first portion (16a), and a third portion (16c) which extends obliquely towards the housing (11) and which is fixedly connected to the second portion (16b).

3. Safety fitting according to Claim 1 or 2, **characterized by** a second actuating lever (17) which is fixedly mounted on the rotatable second coupling half (13b) of the input coupling (13) and which is intended to rotate the second coupling half (13b) in relation to the first coupling half (13a).

4. Safety fitting according to Claim 3, **characterized in that** the first actuating lever (16) and the second actuating lever (17) are mounted on the rotatable second coupling half (13b) of the input coupling (13) so as to be offset by 180°.

5. Safety fitting according to Claim 3 or 4, **characterized in that** the first actuating lever (16) and the second actuating lever (17) have different geometric contours.

6. Safety fitting according to one of Claims 3 to 5, **characterized in that** the second actuating lever (17) extends obliquely away from the rotatable second coupling half (13b) of the input coupling (13) .

7. Safety fitting according to one of Claims 1 to 6 **characterized in that** the housing (11) has a stop (18) which limits the rotatability of the second coupling half (13b) in relation to the first coupling half (13a) and in relation to the housing (11) .

8. Safety fitting according to Claim 7, **characterized in that** the stop (18) cooperates with the third portion (16c) of the first actuating lever (16).

9. Safety fitting according to one of Claims 1 to 8, **characterized in that**
both the backflow preventer (20) and the discharge valve (21) comprise a blocking element (25, 27) and a valve seat (26, 28), which can be moved in relation to one another,
the blocking element (25) of the backflow preventer (20) and the blocking element (27) of the discharge valve (21) are formed by a common, pot-like element (29) which prevents the backflow preventer (20) and the discharge valve (21) from being able to be in an open position at the same time.

## Revendications

1. Armature de sécurité (10),
avec un boîtier (11) et un couvercle de boîtier (12), qui définissent ensemble une cavité ou un espace intérieur,
avec un dispositif anti-retour (20) agencé dans la cavité ou l'espace intérieur pour interrompre une liaison pour un liquide entre une première zone (23) de l'armature de sécurité (10) et une deuxième zone (24) de l'armature de sécurité (10),
avec une soupape de décharge (21) agencée dans la cavité ou l'espace intérieur pour vider la deuxième zone (24) de l'armature de sécurité (10) du liquide,
avec un accouplement de sortie (14) pour relier l'armature de sécurité (10) à un appareil de prélèvement d'eau potable côté sortie,
**caractérisé par**
un accouplement d'entrée (13), qui présente une première moitié d'accouplement (13a) montée fixement sur le boîtier (11) et une deuxième moitié d'accouplement (13b) rotative par rapport à la première moitié d'accouplement (13a) pour relier l'armature de sécurité à un appareil d'amenée d'eau potable côté entrée, des saillies (15) étant réalisées sur la deuxième moitié d'accouplement (13b), qui peuvent être introduites dans des évidements correspondants d'un contre-accouplement de l'appareil d'amenée côté entrée, afin de monter l'armature de sécurité (11) par l'intermédiaire de son accouplement d'entrée (13) à la manière d'une baïonnette sur le contre-accouplement de l'appareil d'amenée côté entrée, par une rotation consécutive de la deuxième moitié d'accouplement (13b),
un premier levier d'actionnement (16) monté fixement sur la deuxième moitié d'accouplement rotative (13b) de l'accouplement d'entrée (13) pour faire tourner la deuxième moitié d'accouplement (13b) de l'accouplement d'entrée (13) par rapport à la première moitié d'accouplement (13a) de l'accouplement d'entrée (13) et par rapport au boîtier (11).

2. Armature de sécurité selon la revendication 1, **caractérisée en ce que** le premier levier d'actionnement (16) présente une première section (16a) s'étendant en oblique à distance de la deuxième moitié d'accouplement rotative (13b) de l'accouplement d'entrée (13), reliée fixement à la deuxième moitié d'accouplement (13b), une deuxième section (16b) s'étendant parallèlement à un axe central longitudinal du boîtier (11), reliée fixement à la première section (16a), et une troisième section (16c) s'étendant en oblique vers le boîtier (11), reliée fixement à la deuxième section (16b).

3. Armature de sécurité selon la revendication 1 ou 2, **caractérisée par** un deuxième levier d'actionnement (17) monté fixement sur la deuxième moitié d'accouplement rotative (13b) de l'accouplement d'entrée (13) pour faire tourner la deuxième moitié d'accouplement (13b) par rapport à la première moitié d'accouplement (13a).

4. Armature de sécurité selon la revendication 3, **caractérisée en ce que** le premier levier d'actionnement (16) et le deuxième levier d'actionnement (17) sont montés en décalage de 180° sur la deuxième moitié d'accouplement rotative (13b) de l'accouplement d'entrée (13) .

5. Armature de sécurité selon la revendication 3 ou 4, **caractérisée en ce que** le premier levier d'actionnement (16) et le deuxième levier d'actionnement (17) présentent des contours géométriques différents.

6. Armature de sécurité selon l'une quelconque des revendications 3 à 5, **caractérisée en ce que** le deuxième levier d'actionnement (17) s'étend en oblique à distance de la deuxième moitié d'accouplement rotative (13b) de l'accouplement d'entrée (13).

7. Armature de sécurité selon l'une quelconque des revendications 1 à 6, **caractérisée en ce que** le boîtier (11) présente une butée (18) qui limite la possibilité de rotation de la deuxième moitié d'accouplement (13b) par rapport à la première moitié d'accouplement (13a) et par rapport au boîtier (11).

8. Armature de sécurité selon la revendication 7, **caractérisée en ce que** la butée (18) coopère avec la troisième section (16c) du premier levier d'actionnement (16) .

9. Armature de sécurité selon l'une quelconque des revendications 1 à 8, **caractérisée en ce que**
le dispositif anti-retour (20) et la soupape de décharge (21) comprennent tous deux un élément d'arrêt (25, 27) et un siège de soupape (26, 28) qui sont mobiles l'un par rapport à l'autre,
l'élément d'arrêt (25) du dispositif anti-retour (20) et l'élément d'arrêt (27) de la soupape de décharge (21) sont formés par un élément commun en forme de pot, (29) qui empêche le dispositif anti-retour (20) et la soupape de décharge (21) d'être simultanément dans une position ouverte.
